# EUROPEAN PATENT APPLICATION

(11) **EP 4 571 534 A1**
(43) Date of publication of application: **18.06.2025**
(21) Application number: 23216094.5
(22) Date of filing: 13.12.2023
(51) Int. Cl.: G06F 16/84, G06F 16/906

(54) **METHOD AND SYSTEM FOR CONTROLLING AND/OR MONITORING A PRODUCTION PROCESS AND/OR A PRODUCTION FACILITY WITHIN AN INDUSTRIAL PRODUCTION CHAIN**

(71) Applicant: BASF SE, 67056 Ludwigshafen am Rhein (DE)
(72) Inventor: von Muehlenen, Adrian, 6300 Zug (CH); Bruennemann, Michael Dipl.-Ing., 48165 Muenster (DE); Schwabe, Henning, 67056 Ludwigshafen am Rhein (DE); Wolfgart, Amelie, 48149 Muenster (DE); Eckardt, Gabriele, 67061 Ludwigshafen am Rhein (DE); Dahlenburg, Olaf, 60487 Frankfurt am Main (DE); Bornemann, Christian, 48165 Muenster (DE); Wegner, Jens, 48165 Muenster (DE); Flores-Figueroa, Aaron Dr., 60487 Frankfurt am Main (DE); Binder, Martin, 67056 Ludwigshafen am Rhein (DE); Pinger, Yannick Karsten, 68163 Mannheim (DE)
(74) Representative: BASF IP Association

(57) **Abstract**

Disclosed is a computer-implemented method for controlling and/or monitoring a production process and/or production facility being part of an industrial production chain, wherein differing taxonomies for chemical, physical and/or technical entities within ontology/taxonomy areas provided by at least two participants of the industrial production chain are automatically resolved, in order to let such taxonomies be consistent along the production chain, wherein underlying information/data for a chemical, physical and/or technical entity within one taxonomy area provided by the at least two participants of the production chain is/are evaluated with regard to their semantic and/or technical meaning and wherein, based on the result of the evaluation of the semantic and/or technical meaning of the underlying information/data of the chemical, physical and/or technical entity, a taxonomy relation between the underlying information/data of the at least two participants is determined.

## Description

### Technical Field

The present disclosure relates to industrial production or value chains, particularly to industrial production chains or corresponding supply chains, where at least two production chain participants are involved.

### Background

In the field of industrial production and corresponding production processes or underlying production chains, different taxonomies or ontologies for educts, products, intermediate products or even production processes or process steps are used by different companies. Such taxonomies or ontologies include, but are not limited, to different technical classifications, technical terminologies and corresponding technical systematics or structures. Such technical or technological terminologies may be used e.g. for raw materials, to be produced products and their parts, and even being used for production process steps and related services.

Nowadays, these different taxonomies or ontologies are handled manually so that the controlling and/or monitoring of underlying production processes and/or facilities can be negatively affected in case of differences or deviations of underlying taxonomies or ontologies.

An approach for digital automation in the field of robotics regarding manufacturing ontology is disclosed in US 2017/0278000 A1, wherein a product is defined in terms of the method of its manufacture. More particularly, a computer-implemented method for automating manufacturing supply chain planning is described which provides:
a computer processor for processing data,
at least one input device,
at least one output device,
a computer readable storage device,
a first ontology for defining a product in terms of the method of manufacture of said product or for defining a plurality of products in terms of the method of manufacture of said products,
a second ontology for defining the capabilities of a plurality of manufacturing facilities, and
a knowledge representation and reasoning system executed on said computer processor.

The described technology combines a robotic capability model with a manufacturing ontology in an artificial intelligence (Al) reasoning system. The Al reasoning system supports classification of robotic capabilities and formulation of product descriptions in terms of the manufacturing steps utilizing these robotic capabilities and which are needed to produce the various products. The output of the system is a sequence of steps required to produce an underlying product which satisfy and optimize given product specifications, to formulate manufacturing plans for such products. This shall enable intelligent product design by consumers, application software, and manufacturers with a view towards supply chain automation.

### Summary

The present disclosure relates to a computer-implemented method for controlling and/or monitoring a production process and/or production facility being part of an industrial production chain, wherein differing taxonomies for chemical, physical and/or technical entities within technical or technological ontology/taxonomy areas provided by at least two participants of the industrial production chain are automatically resolved, in order to let such taxonomies be consistent along the production chain, wherein underlying information/data for a chemical, physical and/or technical entity within one technical/technological taxonomy area provided by the at least two participants of the production chain is/are evaluated with regard to their semantic and/or technical meaning and wherein, based on the result of the evaluation of the semantic and/or technical meaning of the underlying information/data of the chemical, physical and/or technical entity, a taxonomy relation between the underlying technical/technological information/data of the at least two participants is determined.

The disclosed method for evaluation of the semantic and/or technical meaning of the underlying information/data of the chemical, physical and/or technical entities can be based on predefined classes and/or subclasses for the entities.

According to the disclosed method, the chemical, physical and/or technical entities can be represented by means of corresponding databases, reference lists, semantic models and/or digital twins.

According to the disclosed method, for the chemical, physical and/or technical entities, technical/technological ontology or taxonomy templates can be provided, based on a predetermined ontology/taxonomy of an underlying process and/or product.

According to the disclosed method, classification can utilize an artificial intelligence-, machine learning- or rule-based processing approach, in order to determine similarity of technical terms based on their technical and/or semantic meaning.

According to the disclosed method, in case of a machine learning approach, existing data of at least one production chain participant which relate to production processes, materials, or the like, can be pre-classified with respect to existing taxonomies.

According to the disclosed method, in case that a technical or technological ontology/taxonomy is not yet known, a semantic text recognition based on a natural language processing approach can be performed.

According to the disclosed method, a data integration for production chain participants can be performed, based on an extract transform load procedure, in order to combine data from multiple data sources into a single, consistent data store.

According to the disclosed method, the chemical, physical and/or technical entities can be key performance indicators of an underlying industrial process or product.

The present disclosure also relates to an apparatus for automatically resolving differing taxonomies for chemical, physical and/or technical entities within technical or technological ontology/taxonomy areas provided by at least two participants of an industrial production chain, in order to let such taxonomies be consistent along the production chain, which comprises processing means for evaluating underlying information/data for a chemical, physical and/or technical entity within one ontology/taxonomy area provided by the at least two participants of the production chain with regard to their semantic and/or technical meaning and for determining an ontology/taxonomy relation between the underlying information/data of the at least two participants, based on the result of the evaluation of the semantic and/or technical meaning of the underlying information/data of the chemical, physical and/or technical entity.

The present disclosure also relates to a distributed manufacturing/production chain system for automatically resolving differing taxonomies for chemical, physical and/or technical entities within technical or technological ontology/taxonomy areas provided by at least two participants of an industrial production chain, in order to let such taxonomies be consistent along the production chain, wherein the system comprises one or more computing node(s) for evaluating underlying information/data for a chemical, physical and/or technical entity within one ontology/taxonomy area provided by the at least two participants of the production chain with regard to their semantic and/or technical meaning and for determining an ontology/taxonomy relation between the underlying information/data of the at least two participants, based on the result of the evaluation of the semantic and/or technical meaning of the underlying information/data of the chemical, physical and/or technical entity.

The present disclosure also relates to a data structure being stored in a computer-readable storage medium, the data structure comprising a data format for dynamically resolving different taxonomies which is independent of different taxonomies provided in a distributed manufacturing/production chain.

The disclosed data structure can comprise technical or technological ontology/taxonomy templates for the chemical, physical and/or technical entities, based on a predetermined ontology/taxonomy of an underlying process and/or product.

The present disclosure also relates to the use of the herein disclosed method and/or data structure and/or digital twin for controlling and/or monitoring a production process and/or production facility being part of an industrial production chain, wherein differing taxonomies for chemical, physical and/or technical entities within technical or technological ontology/taxonomy areas provided by at least two participants of an industrial production chain are automatically and/or dynamically resolved, in order to let such taxonomies or ontologies be consistent along the production chain.

The present disclosure also relates to a computer program product for generating an ontology/taxonomy-based digital twin of an underlying industrial product or production process, utilizing a template based on a predetermined ontology or taxonomy of the underlying product. The digital twin can be described semantically, wherein corresponding elements or objects of an underlying production chain are classified, and wherein the digital twin is dynamically amended along the production chain, dependent on differing ontologies or taxonomies of the participants of the production chain.

The present disclosure also relates to a computer element with instructions, which when executed on one or more computing node(s) is configured to carry out the steps of the herein disclosed method or configured to be carried out by the herein disclosed apparatus or system.

### Brief Description of the Drawings

- FIG. 1: depicts a schematic view of a global automotive production chain, in order to illustrate different technical or technological ontology/taxonomy areas during typical pre-manufacturing, manufacturing and post-manufacturing processes;
- FIG. 2: depicts a schematic view of typical ontology definitions used in the chemical industry;
- FIG. 3: shows a combined block/flow diagram for illustrating exemplary digital process steps for an automated generation of a taxonomy-based digital twin by means of classification, namely in the area of coatings production for the automotive industry;
- FIG. 4: shows a flow diagram for illustrating a digital recognition of KPIs (as entities) provided in different taxonomies;
- FIG. 5: depicts a schematic overview of production process steps for producing a coating for the automotive industry for illustrating basic aspects of corresponding taxonomy translation;
- FIG. 6a, b: depict exemplary material codes used in the chemical industry, in order to illustrate how data can be semantified and joined (Fig. 6b and Fig. 6c), based on a respective ontology; and
- FIG. 7: illustrates an exemplary structure of an ontology landscape in the chemical industry, based on the "EMMC-CSA" project of the European Commission (EC).

### Detailed Description

"Taxonomy" is generally known to entail the description, naming and classification of objects or living things.

In an industrial production chain environment, taxonomy means the hierarchical classification of entities of interest of an underlying business entity or industrial entity like an enterprise, organization or administration, used to classify documents, digital assets and other information. In such an entity, taxonomies more particularly identify hierarchical relationships within a category of information and are used for organizing information for both internal and external use of entity. Within the entity, they can be used for classifying documents into categories such as proposals, contracts, letters, and briefings. Taxonomies therefore are an important aspect for the digital transformation and related automation of supply chains.

Taxonomies are designed to categorize items within just one dimension. In product information management (PIM) systems, taxonomy relationships exist with digital twins of production assets, e.g. product part numbers, but it is not possible to extend such a taxonomy to other assets within a company and even outside a company.

Ontologies, on the other hand, provide added layers to such taxonomy relationships that take it outside of just the product domain to other domains such as customer data and digital assets.

According to the prior art, such taxonomies of underlying business entities, or industrial entities respectively, are handled e.g. by means of mapping tables and including data of the underlying products, processes and services, in order to correlate e.g. mentioned part numbers of one company with corresponding part numbers of another company.

According to another example, namely the in the technical field of coating materials, test procedures are applied to determine mechanical and optical surface properties of produced coatings. For determining such physical properties, a large amount of test data is produced, e.g. experimental data of a brine test (German "Salzlaugentest") or a stone chipping test (German "Steinschlagtest"). During such tests, many customer-specific and thereupon unstructured data or data sets are produced.

According to the present disclosure, it has been recognized that above mentioned data underly different local or proprietary taxonomies but need to be consistent through the entire production chain in order to avoid serious production problems. In addition, such different taxonomies may cause also product quality issues, e.g. "COA" (Certificate of Authenticity) issues, due to different DIN norms which need to be interpretated concerning the meaning of underlying evaluation results.

The underlying concept is based on entities, for instance data objects or therein included attributes, like the known "Digital product passport". In particular, it is proposed to utilize such a data object along a whole production chain, i.e. for instance "End-to-End" in a complete production production chain or even during an entire life cycle of an underlying product or a corresponding intermediate product, wherein further attributes concerning underlying taxonomies of different participants along a whole production chain are added. Such further attributes can be added to an underlying data object of a logistics- or product-related business interface, for instance via a respective program interface of an underlying Enterprise Resource Planning (ERP) system being located on one or both sides of two respective participants of the production chain.

The present disclosure comprises the following aspects:
- The proposed data objects can be implemented as reference lists being based on pre-established digital twins of a respective underlying product, utilizing an underlying template based on a predetermined ontology or regarding taxonomy of the underlying product. Such an ontology can be related, for instance, to coating materials being delivered to the automotive industry.
- Such a digital twin can be described semantically, wherein corresponding elements or objects of an underlying production chain are classified, and wherein a mentioned digital twin can be dynamically enriched along the production chain according to differing ontologies of participants of the production chain.
- New data format for dynamically resolving the different taxonomies which is independent of the different taxonomies.
- Automatically implemented Classifier approach which is AI-, ML- or Rule-based and which serves to determine similarity of technical terms based on their technical and/or semantic meaning.
   In case of a Machine Learning (ML) approach, existing data of at least one production chain participant which relate to business processes, production processes, materials, etc. are pre-classified with reference to existing taxonomies.
   If a taxonomy is not yet known, an e.g. semantic text recognition using known "Natural Language Processing" (NLP) approaches can be performed. Hereby, the required data integration process for all participants can be implemented using the known "Extract Transform Load" (ETL) procedure that can combine data from multiple data sources into a single, consistent data store that is loaded into a data warehouse or other target system.

With the herein proposed automated digital taxonomy resolving approach, any entity of an underlying production chain, i.e. any subject, object, process, material, product, etc., can be represented along the entire production chain by means of an ontology/taxonomy, e.g. by means of an according semantic model. Hereby, different taxonomies of different production chain participants can be linked with each other in a fully automatable manner.

Based on the proposed automated taxonomy resolving approach, a given taxonomy can be extended horizontally, i.e. along the production chain, with additional semantic models, and insofar "grows" with an underlying knowledge domain, or an automatically generated knowledge base or system. In other words, new use cases of a given taxonomy can be generated dynamically and automatically.

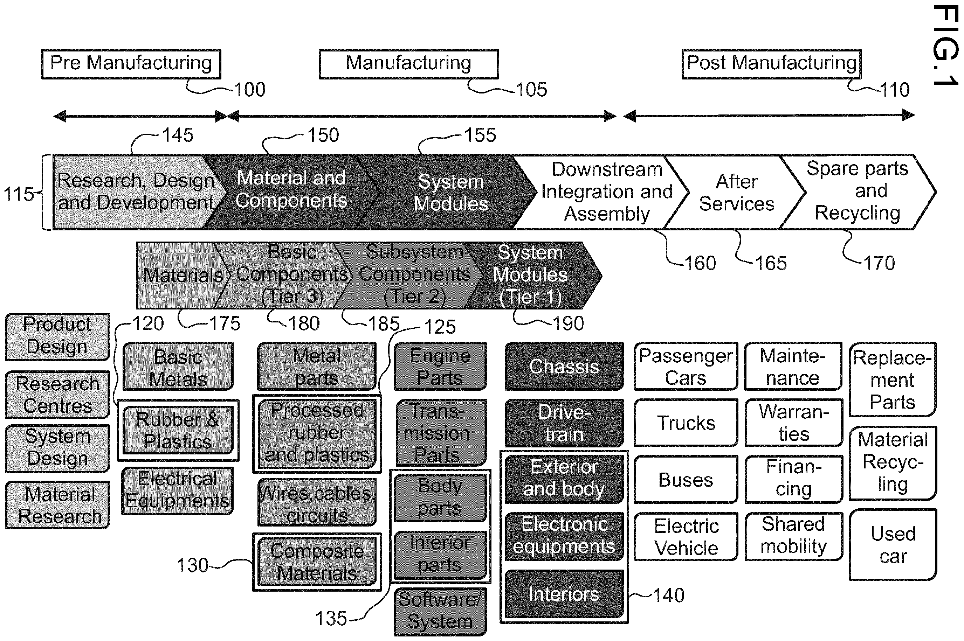

The exemplary, globally operated automotive production chain shown in FIG. 1 includes differing taxonomy areas along the three exemplary manufacturing process stages, a pre-manufacturing stage 100, a manufacturing stage 105, and a post manufacturing stage 110. In particular, the production of plastic materials required for a global automotive production chain 115 is depicted schematically. The underlying raw materials being provided by a chemical company are marked by frames 120, 125, 130, 135, 140.

The pre-manufacturing stage 100 includes the research, design and development of automotive products 145. The manufacturing stage 105 includes the production of materials and components 150 and of system modules 155. After an intermediate step 160 of downstream integration and assembly of automotive components, the post-manufacturing 110 includes after services 165 and spare parts and recycling processes 170. During the manufacturing stage 106, from the starting materials 175, basic components 180 are produced on a "Tier 3" level, subsystem components 185 on a "Tier 2" level and system modules 190 on a "Tier 1" level.

As highlighted in the lower part of the diagram, the starting (raw) materials 175, in the present production scenario, are rubber and plastics 120. From these starting materials 175, in "Tier 3" level, basic components like processed rubber and plastics 125 and composite materials 130 are produced. From these basic components 125, 130, in "Tier 2" level, body parts and interior parts 135 of an automobile are manufactured. From these subsystem components 185, in "Tier 1" level, exterior and body, electronic equipment and interiors of an automobile 140 are manufactured.

For all the described materials 175, basic components 180, subsystem components 185 and system modules 190, in most cases different material specifications and part numbers are used on side of the supplier(s) and the manufacturer(s), based on accordingly different, proprietary ontologies or taxonomies. These differences may cause significant production-related problems.

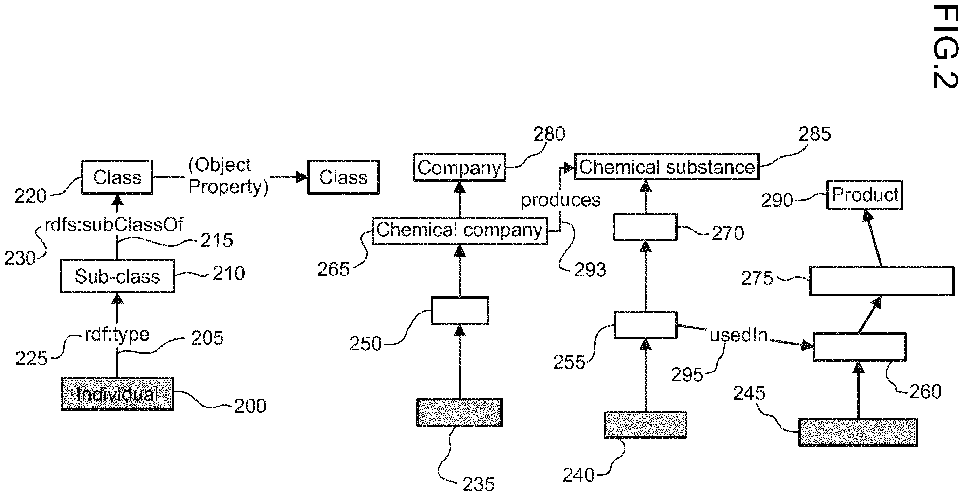

In FIG. 2, there are shown different examples of ontology definitions in the field of chemical industry. At the lower part of the shown ontology, and corresponding hierarchy respectively, there are shown "individuals" 200 which represent things or objects that can be pointed to in a chemical environment. These individuals 200 are linked 205, 215 to classes 220 and subclasses 210 by means of predicate "rdf:type" 225, i.e. a property used to state that a resource is an instance of a class, and predicate "rdfs.subClassof' 230 which describes that a subject is a subclass of a class. Such an RDF Schema (= "Resource Description Framework" Schema) can be in accordance with the "Web Ontology Language" (OWL) as being defined by the WorldWide Web Consortium (W3C).

The herein shown examples of individuals 200 are the company site of an assumed underlying "Production site of Chemical company 1" 235, "Chemical compound 1" 240 and "Chemical agent X" 245. These "Individuals" 200 are linked to corresponding/respective subclasses "Chemical company 1" 250, "Chemical compound" 255 and "Chemical agent" 260 which are corresponding superordinate terms. Further superordinate subclasses are "Chemical company" 265, "Chemical compound class" 270 and "Chemical agent class" 275. In the present example, the corresponding top-level classes are "Company" 280, "Chemical substance" 285 and "Product" 290.

In the shown diagram, further (horizontal) relations between certain classes/subclasses are "Chemical company "produces 293 "Chemical substance" and "Chemical compound" 255 used in 295 "Chemical agent" 260.

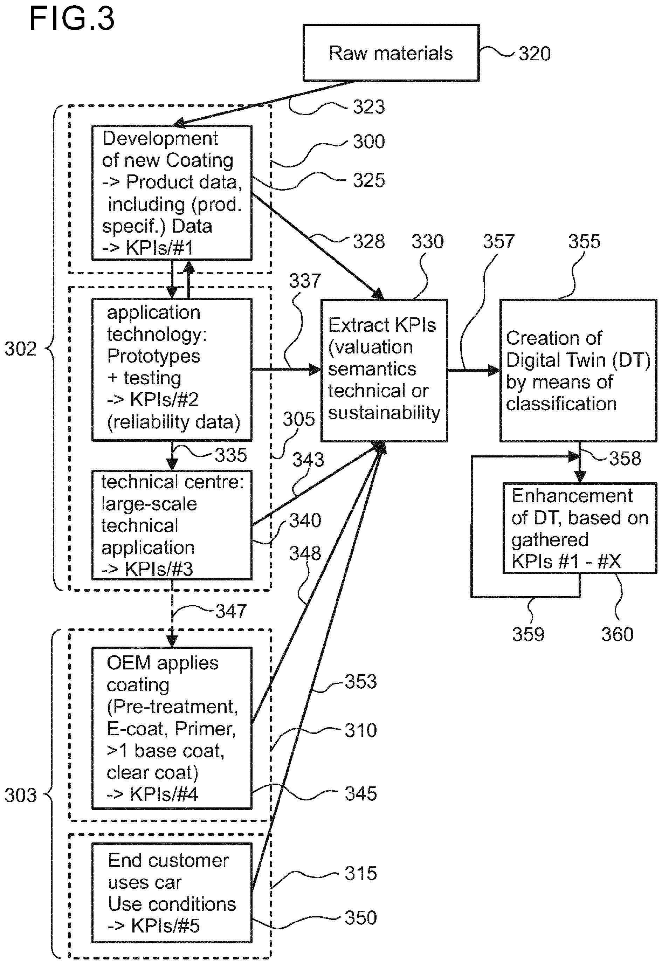

In the combined block/flow diagram shown in FIG. 3, different taxonomy areas are depicted by way of dotted lines 300, 305, 310, 315. The first company may be coating material production company. The first two taxonomy areas are provided inside the first company 302, for instance the coating material production company, and the other two taxonomy areas are provided outside said first company 302, namely by other participants 303, such as OEMs or companies producing coated materials, of the associated production chain, or corresponding "production chain" respectively.

Based on chemical raw materials 320, the first company develops 325 small batches of new coating materials to be used for coating vehicles like passenger cars or trucks. These new coating materials, for instance, may be selected from e-coat materials, primer materials, basecoat materials and clearcoat materials, binder compositions, pigment pastes, topcoat materials, and hardener compositions.

The development and production of new coating materials may be performed according to information 323 about these materials. Development and production of small batches of new coating materials may be associated with a first taxonomy area 300.

The underlying entities, in the present taxonomy area 300, are product data and corresponding reliability data which are regarded as key performance indicators (KPIs) in the present embodiment, which need to be used both inside the first company and outside the first company, for instance with other participants of the whole production chain, or production chain respectively. Such KPIs/#1 can be coating specification data like physical property data, such as density, viscosity, solvent content, pH, application data and/or appearance data, such as color data.

It is mentioned hereby that using KPI data as basis for automatically handling taxonomy issues along an entire production chain is only preferred, because such data can be regarded as the most important data which need to be shared by the participants of the production chain and to ensure that all participants have the same understanding of the technical or business-related meaning of such shared data.

The second taxonomy area 305 which is also provided inside the first company may be associated with two further technology areas 335, 340, which also produce certain KPIs that need to be shared with external companies, for instance participants of the whole production/production chain, as well.

The first technology area 335 of the second taxonomy area 305 relates to the upscaling and testing where a larger batch size of the newly developed coating material is produced, prototypes of coated products are generated and tested. Such tests may include stress tests for the produced coated products, in order to determine their durability under real-world conditions. Such KPIs/#2 can be coating reliability data like weatherability stability, scratch resistance, blister performance, appearance data, application data, curing data and/or adhesion performance.

The second technology area 340 of the second taxonomy area 305 relates to the large-scale production of coating materials being tested successfully in the first technology area 335. Such KPIs/#3 can be physical property data, curing data and/or appearance data.

According to the underlying process for an automated ontology/taxonomy resolvement, the described three types of KPls, namely KPIs/#1, KPIs/#2 and KPI's/#3 are provided 328, 337, 343 to another processing step 330, where the underlying KPI data are extracted and evaluated with regard to their semantic and/or technical meaning. Such technical meaning can also include semantic aspects and view of environmental effects of coating materials and coatings produced therefrom.

It is mentioned hereby that the processing step 330 does not only process KPI data provided by the two taxonomy areas 300, 305 being provided by the first company, but also KPI data being created in further taxonomy areas 310, 315, being provided by other production chain participants, for example supply chain partners or even end customers.

In the present scenario, the process for ontology/taxonomy resolvement includes two further taxonomy areas 310, 315. These taxonomy areas 310, 315 are handled by two further participants 303 of the entire production chain, namely an original equipment manufacturer (OEM) 345 and an end customer 350 of the underlying product being produced by the participants of the production chain. The OEM 345 provides further KPIs/#4 and the end customer 350 further KPIs/#5 which are provided 348, 353 to the already described processing step 330, where the underlying further KPI data are extracted and evaluated as well in the above-described manner, namely with respect to their semantic and/or technical meaning.

In order to generate the further KPIs/#4, the OEM 345 applies coating materials supplied 347 by the underlying company 302 to vehicles or a part thereof. The supplied coating materials may be used at least in part to generate multilayer coatings. Such multilayer coatings may comprise at least two coating layers prepared from different coating materials. A typical multilayer coating may comprise, for example, an e-coat layer produced from an e-coat material, a primer layer produced from a primer coating material or a first basecoat material, a basecoat layer produced from a basecoat or second basecoat material and a clearcoat layer produced from a clearcoat material.

In order to generate the further KPIs/#5, an end customer 350 uses such a coated vehicle being produced by the OEM 345, wherein the vehicle being produced by the OEM 345 is coated on a car body as a last production step, i.e. only after the vehicles complete production. However, the coating may either be applied by the OEM 345 or the OEM 345 may use already coated parts provided by a previous supplier, i.e. the vehicle can also be produced by an additional (not shown) car/vehicle manufacturer using the mentioned automotive components/parts as already coated parts, i.e. parts which are already painted with such a coating by the OEM 345.

These KPIs/#5 related to use of the vehicle by the customer 350 can be mainly related to use conditions of the car/vehicle and corresponding signs of wear and tear of the coating, as a result of the usage of the car/vehicle, in view of the underlying use conditions. Such sign of wear and tear can be evaluated or measured, for instance based on the roughness of the coating which should increase during usage of the car/vehicle.

Based 357 on all extracted and evaluated 330 KPls, there are following two further processing steps 355, 360, wherein step 360 following 358 after step 355, is repeated by means of a program loop 359.

In processing step 355, the extracted KPIs are classified by means of an automated classifier, wherein based on such classified KPI data, a digital twin (DT) of the underlying production chain is created, based on all classified KPI data. Such a digital twin being created in step 355 provides a well-structured reference list of all KPIs on the basis of which an automated assignment or mapping of different KPI data being used by different participants of the production chain can be accomplished. By this semantic assignment or mapping it can be ensured that all these KPIs can be used with the same semantic and/or technical meaning along the entire production chain.

In processing step 360, the already created 355 DT is continually enhanced or improved, based on newly gathered KPIs/#1, KPIs/#2, KPIs/#3, KPIs/#4 and/or KPIs/#5. Hereby, for instance further production process aspects or newly added participants, can be taken into consideration in order to get an as complete as possible picture of the underlying production and supply chain.

It is also noteworthy that some, or all, of the processing steps 330, 355 and 360 can be implemented either as centralized processing means, wherein all participants of the production chain are connected to and/or have access to these processing means. In such a scenario, the KPIs of all participants can be gathered and processed as described in the embodiment of FIG. 3. Alternatively, in a distributed/decentralized approach, each participant can have implemented processing means for conduction the first processing step 330, wherein only the two further processing steps 355, 360 are implemented in a centralized manner so that all participants are connected to, and/or have access to, the corresponding two further processing means.

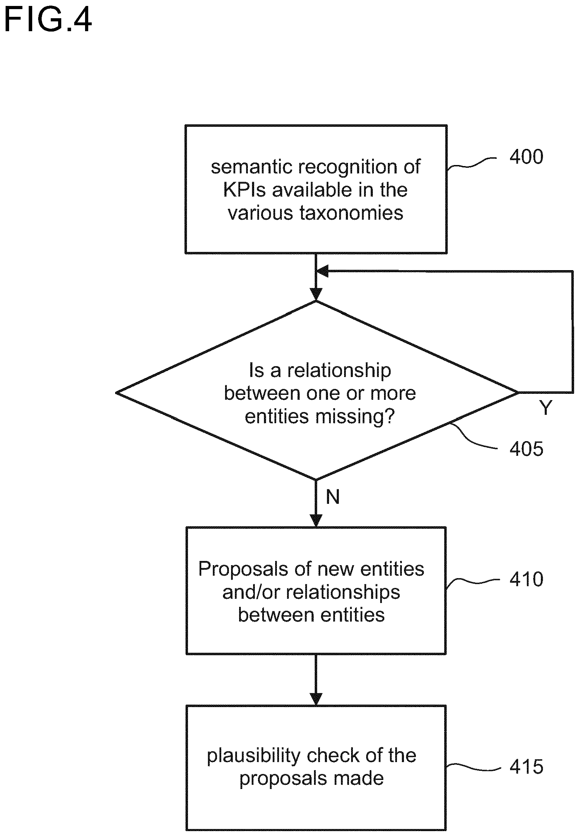

FIG. 4 shows an exemplary implementation of a method for creating semantic relations between KPIs from different entities of the production chain which belong to distinct taxonomy areas. This method can be implemented by means of common artificial intelligence ("Al") or "(Random) Forest Tree" based approaches.

In step 400, a semantic recognition of KPIs existing in various taxonomy areas is performed an the recognized KPIs are stored in a reference list or in a database. Such a database can be structured according to all existing entities of the production chain which provide KPI data for an underlying manufacturing or production process.

In following process loop 405, it is checked repeatedly for an empirically predefined number of cycles, whether a taxonomy/ontology-based relation between two or more entities is missing. If such a relation is missing, these entities and/or the underlying missing taxonomy relations are (at least temporarily) stored and step 405 is repeated.

After a number of such business-related or technical/technological entities with missing taxonomy relations have been found, in the following step 410, for the newly found entities with missing taxonomy relations, possible taxonomy relations are determined or proposed. This determination is preferably be done in an automated way, namely based on existing databases or reference lists including semantic relations, e.g. existing Ontology databases, Thesaurus databases with existing technical synonyms, antonyms and/or other related technical information.

According to step 415, the determined/proposed taxonomy relations are subjected to a plausibility check which can be performed by cross-checking such taxonomy relations with taxonomy relations of other entities of the entire production chain or which can be based on common or semantic language rules.

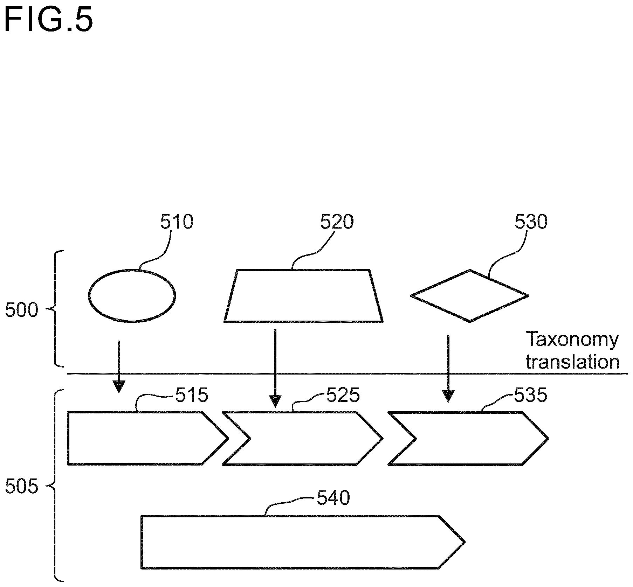

FIG. 5 schematically depicts three different taxonomy areas 510, 520, 530 associated with a coating material producer 500 and how a taxonomy translation can be accomplished between the coating material producer 500 and another exemplary participant 505 of the production chain, in the present example a vehicle producer.

The first taxonomy area 510 relates to the production and provision of a coating material, for instance a newly developed coating material see blocks 325, 335 and 340 of FIG. 3. The coating material may be an e-coat material, a primer material, a basecoat material, a clearcoat material, a binder composition, a pigment paste, a topcoat material or a hardener composition.

The technical terminology being used on side of the coating material producer 500 has to be in line with the corresponding terminology being used by the other production chain participant 505. As a consequence, differing technical terms used on both sides 500, 505, have to be translated with respect to the technical or semantic meaning of the terminology used both for the handling coating materials 515 purchased form the coating material producer 500 and the technical- or business-related terminology being used for the marketing and sale of final coated vehicle products 540. Exemplary and potentially differing technical terms in the first taxonomy area 510 are coating material name, coating material number and/or coating material ID.

The second taxonomy area 520 relates to coated products produced from coating materials supplied by coating material producer 500. However, in the present coating material production scenario and the corresponding underlying taxonomy area, the technical terminology being used on side of the coating material producer 500 has to be in line with the corresponding terminology being used by the other production chain participant 505. Therefore, any differing technical terms have to be translated as well, with respect to the technical or semantic meaning of the terminology used for the coatings that have been tested and evaluated according to step 335 in FIG. 3, when the coating materials are applied by the car/vehicle producer 505 as car/vehicle paintings 525.

However, it is noteworthy that the OEM 345 depicted in FIG. 3 may never see the paint material being produced so that the OEM 345 cannot provide any data on that material. In such case, the two taxonomy areas 510 and 520 may collapse to only one taxonomy area.

Accordingly, the terminology being used for the coatings offered by the marketing and sale of underlying end products 540 (namely personal cars, utility vehicles, trucks, etc.) has to be semantically in line with the corresponding terminology being used on side of the coating producer 500. Exemplary and potentially differing technical terms in the second taxonomy area 520 are color name data, such as color codes, color names, color IDs.

The third taxonomy area 530 relates to auto/vehicle frames, which are coated with coating material(s) produced using the second technology area 340 depicted in FIG. 3. Also in this taxonomy area, the technical terminology being used on side of the coating producer 500 has to be in line with the corresponding terminology being used by the other production chain participant 505. Therefore, any differing technical terms have to be translated as well, with respect to the technical or semantic meaning of the terminology used for the coating materials being applied to a car/vehicle frame 535 and for the marketing and sale of a complete car/vehicle 540 by the car/vehicle producer 505. Exemplary and potentially differing technical terms in the third taxonomy area 530 are coating material name, coating material number and/or coating material ID, color name data, such as color codes, color names, color IDs.

An exemplary knowledge-based approach to join data based on a given Ontology, in order to allow for acquiring alternative data out of an Ontology-based graph structure, is depicted in FIG.s 6a and 6b.

This shown approach is based on the following semantified data for this Ontology:
- EC Raw Material code;
- Amount of a particular substance in a Raw Material;
- Substance names;
- CAS Registry number of a substance.

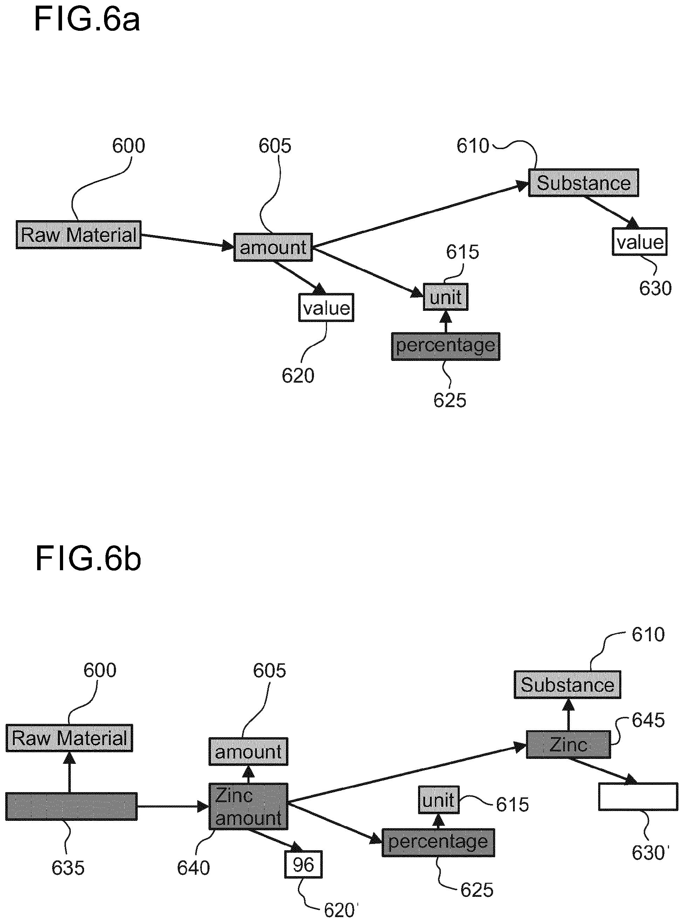

FIG. 6a and 6b hereby illustrate exemplary class relationships (in the following referred to as "related/linked to") wherein the shown boxes represent "classes", "individuals" and "values". The shown relations between these boxes are "object property", "subclass of" and "type". The "value" boxes include value data (see FIG. 6b) of properties of "individuals" of a subject class.

In the Ontology-based graph structure shown in FIG. 6a, a first class "Raw Material" 600 relates to a second class "amount" 605, namely as a mentioned object property relation. The second class "amount", in turn, relates to two further classes "Substance" 610 and "unit" 615, namely as further object property relations. The class "amount" 605 also relates to a subclass "value" 620, wherein the class "Substance" 610 also relates to a corresponding subclass "value" 630. In addition, the class "unit" 615 has a "type" relation with an individual property "percentage" 625.

The second example of an Ontology-based graph structure depicted in FIG. 6b also comprises the same four classes "Raw Material" 600, "amount" 605, Substance" 610 and "unit" 615. But in this example, these four classes 600 - 615 are not linked, or related respectively, to each other according to an object property relation.

Instead of such relations, these four classes 600 - 615 have "type" relationships with corresponding four individual properties 625, 635, 640, 645. Insofar, the class "Raw Material" 600 relates to the individual property ""EC MAT code" 635, the class "amount" 605 relates to the individual property "Zinc amount" 640, the class "unit" 615 relates to the individual property "percentage" 625 and the class "Substance" 610 relates to the individual property "Zinc" 645.

Accordingly, the individual property "EC MAT code" 635 has an object property relation with the individual property "Zinc amount" 640. The individual property "Zinc amount" 640, in turn, has two further object property relations with the individual property "percentage" 625 and the individual property "Zinc" 645.

In addition, the individual property "Zinc amount" 640 further relates to a value subclass "96" 620' and the individual property "Zinc" 645 further relates to a value subclass "1234-56-7" 630'.

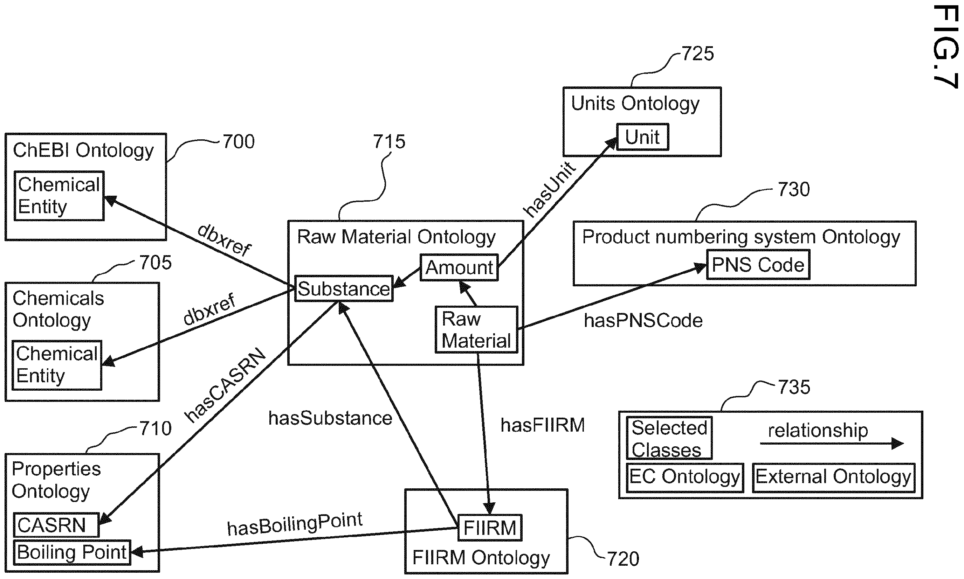

FIG. 7 depicts an exemplary structure of a European Commission (EC) based ontology landscape, or taxonomy landscape respectively, in the chemical industry sector.

The right ontologies allow for semantic interoperability between the different technical systems. The Semantic Interoperability Expert Group of the Alliance for Internet of Things Innovation (Al-OTI) Working Group on Standardization has created an Ontology Landscape that currently includes 30 ontologies from different application areas of loT.

Chemical Entities of Biological Interest (ChEBI) is a freely available dictionary of molecular entities focused on small chemical compounds. The molecular entities in question are either natural products or synthetic products used to intervene in the processes of living organisms. Genome-encoded macromolecules (nucleic acids, proteins and peptides derived from proteins by cleavage) are not as a rule included in ChEBI. In addition to molecular entities, ChEBI contains groups (parts of molecular entities) and classes of entities. ChEBI includes an ontological classification, whereby the relationships between molecular entities or classes of entities and their parents and/or children are specified. ChEBI is available online at http://www.ebi.ac.uk/chebi/.

EU-Raw Materials Intelligence Capacity Platform (EU-RMCP) - Technical system specification, 2018 is based on an ontology of the domain of mineral resources. A user can navigate in the ontology by using a Dynamic Graph of Decision (DDG), which allows him/her to discover the solutions which he/she is looking for without having to formulate any question. The system is coupled with a 'RDF Triple Store' (a database storing the ontologies), factSheets, docSheets and flowsheets (i.e., specific formatted forms) related to methods and documentation, scenarios and metadata.

This technical system is connected with existing Knowledge Data Platforms (KDPs), e.g. the IKMS (EURare), the EU-MKDP (Minerals4EU), the EU-UMKDP (ProSUM), the EU-CRMKDP (SCRREEN), the European Geological Data Infrastructure (EGDI) developed by EuroGeoSurveys (EGS) and the RMIS 2.0 (Raw Materials Information System) which is currently being developed by the European Commission DG JRC in Ispra, allowing all these KDPs to enable their users from benefitting of an underlying Expert System.

The MICA Main Ontology actually covers seven thematic domains: 'Primary' and 'Secondary Mineral Resources', 'Industrial Processing and Transformation', 'Raw Materials economics' (including CRMs), 'Raw materials Policy & Legal Framework', 'Sustainability of Raw Materials' and 'International Reporting' (Figure 3). The DDG offers in a single place, a unique access to most of the data available, including a contextual access to resources like the European legislation, and an access to several key studies like the "Minventory study1" (Parker et al., 2015), or the Material System Analysis2 (BIO by Deloitte, 2015), etc. The first functionality of the DDG and its side applications is an 'intelligent' search engine in which data, information and knowledge are strongly and cleverly connected, which allows for it to be a powerful decision-aid tool. Thus, the DGG is not a 'pure' search engine that simply generates a pre-formulated answer as we experience with many other search engines.

Referring now back to FIG. 7, an above-described "Raw Material" Ontology 715, in the present example, includes the entities 'Raw Material', 'Substance' and 'Amount'. The entity `Raw Material' refers to a "Product Numbering System" Ontology 730 which includes the entity `PNS code' and can be accessed by an according DB query 'hasPNSCode'. The entity 'Raw Material' further refers to a "FIIRM" Ontology 720 which includes the entity 'FIIRM' and can be accessed by an according DB query 'hasFIIRM'. "FIIRM" is a known organization that specializes in "Total Business Transformation".

Further, the entity 'Amount' refers to a "Units" Ontology 725 which includes the entity 'Unit' and can be accessed by an according DB query 'hasUnit'. Further, the entity 'Substance' refers to an above described "ChEBI" Ontology 700 which includes the entity 'Chemical Entity' and can be accessed by an according DB query 'dbxref'. Secondly, the entity 'Substance' also refers to a "Chemicals" Ontology 705 which also includes the entity 'Chemical Entity' and can be accessed by the same DB query 'dbxref'. Further, the entity 'Substance' refers to a "Properties" Ontology 710 which includes the entity `CASRN' and can be accessed by the DB query `has-CASRN'. In addition, the "Properties" Ontology 710 further includes the entity 'Boiling Point' which can be accessed by the "FIIRM" Ontology 720 by the DB query `hasBoilingPoint'.

As shown in the box 735, selected classes of such an EC Ontology can have further relationships with an External Ontology.

The above described or similar Ontology landscapes can be used, for instance, for the method for finding missing ontology/taxonomy relations being described in FIG. 4. In particular, for any newly found entities with missing taxonomy relations, possible taxonomy relations can be determined or proposed in an automated manner, based on such Ontology landscapes.

An example for finding replacements of a chemical substance is showing alternatives of "Pluriol P900" which is a polypropylene glycol with a molar mass/weight of 900 g/mol. An automated search in a chemical database would reveal e.g. up to 20 hits, e.g. substances like "Pluriol E1500", "Pluriol E300", "Caradol ED110", or "Pluracol P710R". Based on a classification of the chemical properties of these substances, only the two substances "Pluriol E1500" and "Pluriol E300", which are polyethylene glycols with a molar mass of 1500 g/mol and 300 g/mol, would be automatically selected as a valid replacement of "Pluriol P900".

Another example related to taxonomy-based knowledge acquisition is getting an alternative to "Pluriol P900" with 'good' or 'very good' wetting properties. This substance, namely Polypropylene glycol with a molar mass of 900 g/mol, is classified as a chemical substance and as a polyalcohol. Therefore, one alternative would be "Uniol TG-1000", which though being an additive, is also a Polypropylene glycol, but with a molar mass of 1000 g/mol.

## Claims

1. A computer-implemented method for controlling and/or monitoring a production process and/or production facility being part of an industrial production chain, wherein differing taxonomies for chemical, physical and/or technical entities within ontology/taxonomy areas provided by at least two participants of the industrial production chain are automatically resolved, in order to let such taxonomies be consistent along the production chain, wherein underlying information/data for a chemical, physical and/or technical entity within one taxonomy area provided by the at least two participants of the production chain is/are evaluated with regard to their semantic and/or technical meaning and wherein, based on the result of the evaluation of the semantic and/or technical meaning of the underlying information/data of the chemical, physical and/or technical entity, a taxonomy relation between the underlying information/data of the at least two participants is determined.

2. Method according to claim 1, wherein the evaluation of the semantic and/or technical meaning of the underlying information/data of the chemical, physical and/or technical entities is based on predefined classes and/or subclasses for the entities.

3. Method according to claim 1 or 2, wherein the chemical, physical and/or technical entities are represented by means of corresponding databases, reference lists, semantic models and/or digital twins.

4. Method according to claim 3, wherein for the chemical, physical and/or technical entities, ontology or taxonomy templates are provided, based on a predetermined ontology/taxonomy of an underlying process and/or product.

5. Method according to one or more of claims 2 to 4, wherein classification utilizes an artificial intelligence-, machine learning- or rule-based processing approach, in order to determine similarity of technical terms based on their technical and/or semantic meaning.

6. Method according to claim 5, wherein in case of a machine learning approach, existing data of at least one production chain participant which relate to production processes, materials, or the like, are pre-classified with respect to existing taxonomies.

7. Method according to one or more of the preceding claims, wherein in case that a taxonomy is not yet known, performing a semantic text recognition based on a natural language processing approach.

8. Method according to claim 7, wherein performing a data integration for production chain participants based on an extract transform load procedure, in order to combine data from multiple data sources into a single, consistent data store.

9. Method according to one or more of the preceding claims, wherein the chemical, physical and/or technical entities are key performance indicators of an underlying industrial process or product.

10. An apparatus for automatically resolving differing taxonomies for chemical, physical and/or technical entities within taxonomy areas provided by at least two participants of an industrial production chain, in order to let such taxonomies be consistent along the production chain, which comprises processing means for evaluating underlying information/data for a chemical, physical and/or technical entity within one taxonomy area provided by the at least two participants of the production chain with regard to their semantic and/or technical meaning and for determining a taxonomy relation between the underlying information/data of the at least two participants, based on the result of the evaluation of the semantic and/or technical meaning of the underlying information/data of the chemical, physical and/or technical entity.

11. A distributed manufacturing/production chain system for automatically resolving differing taxonomies for chemical, physical and(or technical entities within taxonomy areas provided by at least two participants of an industrial production chain, in order to let such taxonomies be consistent along the production chain, wherein the system comprises one or more computing node(s) for evaluating underlying information/data for a chemical, physical and/or technical entity within one taxonomy area provided by the at least two participants of the production chain with regard to their semantic and/or technical meaning and for determining a taxonomy relation between the underlying information/data of the at least two participants, based on the result of the evaluation of the semantic and/or technical meaning of the underlying information/data of the chemical, physical and/or technical entity.

12. A data structure being stored in a computer-readable storage medium, the data structure comprising a data format for dynamically resolving different taxonomies, which is independent of different taxonomies provided in a distributed manufacturing/production chain.

13. Data structure according to claim 12, comprising ontology or taxonomy templates for the chemical, physical and/or technical entities, based on a predetermined ontology/taxonomy of an underlying process and/or product.

14. A computer program product for generating an ontology/taxonomy-based digital twin of an underlying industrial product or production process, utilizing a template based on a predetermined ontology or taxonomy of the underlying product.

15. Computer program product according to claim 14, wherein the digital twin is described semantically, wherein corresponding elements or objects of an underlying production chain are classified, and wherein the digital twin is dynamically amended along the production chain, dependent on differing ontologies or taxonomies of the participants of the production chain.

16. Use of a method according to claims 1 to 9 and/or a data structure according to claims 12 and 13 and/or a digital twin according to claims 14 or 15 for controlling and/or monitoring a production process and/or production facility being part of an industrial production chain, wherein differing taxonomies for chemical, physical and/or technical entities within taxonomy areas provided by at least two participants of the industrial production chain are automatically and/or dynamically resolved, in order to let such taxonomies be consistent along the production chain.

17. A computer element with instructions, which when executed on one or more computing node(s) is configured to carry out the steps of the method of any of claims 1 to 9 or configured to be carried out by the apparatus of claim 10 or the system of claim 11.
